(19) Europäisches Patentamt
European Patent Office
Office européen des brevets

(11) EP 0 799 570 A1

(12) EUROPEAN PATENT APPLICATION

(43) Date of publication:
08.10.1997 Bulletin 1997/41

(51) Int. Cl.[6]: A01N 33/12

(21) Application number: 95402772.8

(22) Date of filing: 11.12.1995

(84) Designated Contracting States:
AT CH DE ES FR GB IE IT LI NL PT SE

(71) Applicant: Asensio, Juan Angel
91190 Gif S/Yvette (FR)

(72) Inventor: Asensio, Juan Angel
91190 Gif S/Yvette (FR)

# (54) Preparation and uses of microbicidal formulations

(57) Stable disinfectant and sterilant compositions having both rapid and residual persistent biocidal activity. They comprise a mixture of:

*a*. di-(lower-alkyl)-long-chain-alkyl-benzyl ammonium salts, of the structure:

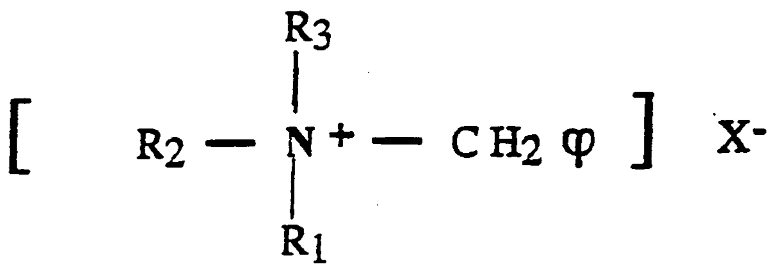

where φ is a phenyl group,
$R_1$=$R_3$ is an alkyl group having from 1 to 6 carbon atoms;
$R_2$ is an alkyl group of long chain, from 10 to 20 carbon atoms, and
$X^-$ is a halide or trihalide group,

*b*. polymeric species of low molecular weight (oligomeric species), of the structure:

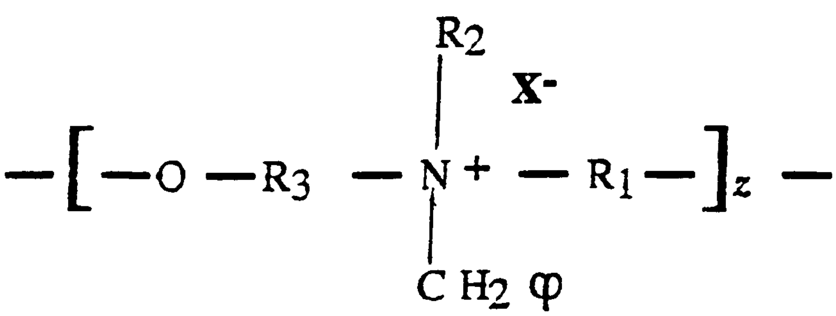

z = from 2 to 6 where φ is a phenyl group,
$R_1$=$R_3$ is an alkyl group having from 1 to 6 carbon atoms;
$R_2$ is an alkyl group of long chain having preferably 14 or 16 carbon atoms; and
$X^-$ is a trihalide group,

EP 0 799 570 A1

*c*. quaternary ammonium salts, of the structure:

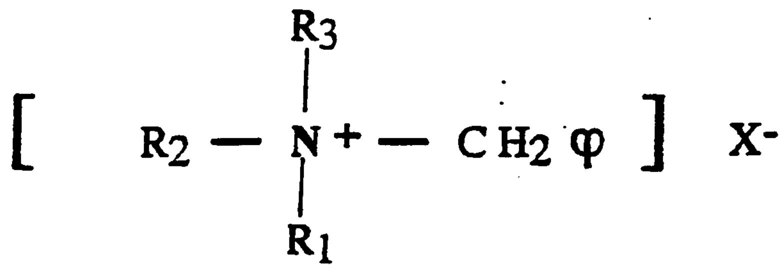

where φ is a phenyl group,
$R_1$ is an alkyl group having from 1 to 6 carbon atoms, or H, an alkenyl group having from 2 to 6 carbon atoms, and an aralkyl group;
$R_2$ is an alkyl group of long chain, having from 10 to 20 carbon atoms, or an alkenyl group having 8 to 22 carbon atoms, or an independent rest of formula:

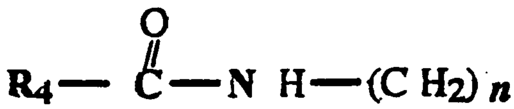

where $n$ = from 2 to 4, and $R_4$ is an alkyl rest from $C_2$ to $C_{22}$;
$R_3$ is a group containing a low-alkyl chain having from 1 to 6 carbon atoms; and
$X^-$ is an halide, chloride or iodide, or trihalide,

*d*. surface active phosphate esters of structure:

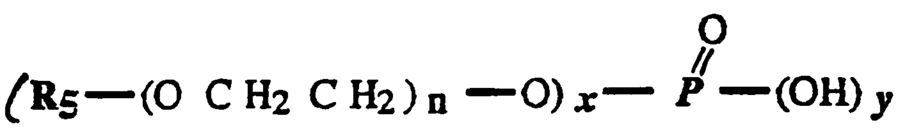

where $x + y = 3$, and R5 group has from 4 to 18 carbon atoms,

*e*. poly-ethanol amines of the general formula:

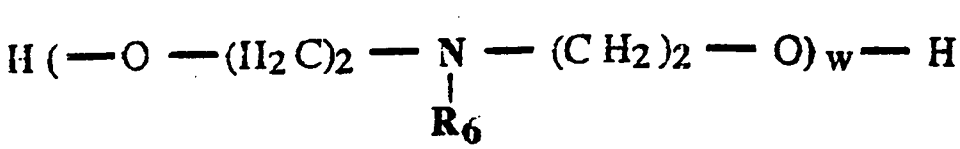

where $R_6$ is an alkyl group having from 2 to 22 carbon atoms, and
w = from 2 to 10.

## Description

### FIELD OF THE INVENTION

This invention relates the process of preparing new quaternary ammonium salts and their use as broad-spectrum microbicides. Their applications in many examples showing its affective and rapid biocidal activity for killing bacteria, fungi, virus and spores, is also presented.

In particular, the invention is concerned with novel low toxic sterilizing compositions of quaternary ammonium compounds together with a synergistic mixture of selected polyethylenamides, and polyester phosphoric, where the preferred anionic species are halides such as chlorides, iodide, and homologue or heterologue trihalides. The cationic species are combinations of novel polymers of linear quaternary ammonium with di-(lower-alkyl)-long-chain-alkylbenzylammonium salts.

### BACKGROUND ART

Quaternary ammonium compounds, are Nitrogen compounds having four groups bonded to a central Nitrogen atom by a covalent N-C bond. The Nitrogen atom has a positive charge, which requires a counter anion or a balancing negative charge to form a neutral compound. As shown by Morrison and Boyd, in the "classic" *Organic Chemistry* 3rd. Edition, Allyn and Bacon, Inc. (Boston), 1973, pp. 738-740, quaternary ammonium halides can be easily prepared by reacting alkyl or aralkyl halides with amine or ammonia in liquid medium, such as water or alcohol solvent.

Products prepared by such reaction have found commercial applications for example as biocides, germicidals, disinfectants, for sanitise and cleaning. They are commercially named benzalkonium chloride, (BAC), and are sold as a 50% industrial standard dilution in water, or 80% concentrated, in ethanol, or other alcoholic solutions. Although, these materials are currently used, they tend to be toxic in nature, so to date they are being discouraged in the domestic and word markets due to environmental reasons and high cost.

Biocides can be divided into two basic classifications: non-oxidizing and oxidizing biocides. Generally, the principal action of non-oxidizing biocides is to alter the permeability of the cell membrane of the micro-organisms, and to interfere with some essential biological processes. Common non-oxidizing biocides include organo-surfur compounds, quaternary ammonium salts, chlorinated phenolics, heavy metal compounds and others. They require longer contact times than oxidizing biocides in order to work but their activity usually persists longer. They therefore provide a long-lived anti microbial protection.

Oxidizing agents usually attack proteins or other chemically active groups (oxidizable) on or within the organisms producing cell injury or death. As described in U.S. Patent N$^{O}$ 4,297,224 to Macchiarolo et al., a variety of compounds are used to deliver oxidizing halogen to aqueous systems. Halogen-containing preparations, are known to be excellent germicides in that they kill rapidly a broad spectrum of bacteria and viruses. However, complexing agents for halogen must be formulated with additional surfactants to make products with low toxicity level and not irritating to the skin. In this invention, new formulations are presented with high halogen content compatible with a low toxic level of the novel mixture.

Previously known species that liberate halogen under use conditions, for example iodophors, have their biocidal power limited to the amount of halogen liberated. Iodophors used as hard surface detergents, for example, usually contain ethoxylated non-ionic surfactants as the iodine carrier. When these detergents are used to 25 to 50 ppm iodine, the halogen is no longer associated with the surfactant ethoxylated and react rapidly with any organic matter present at the surface and consequently is destroy. An object of this invention is to present a product with greatly extended shelf life activity based on a stable equilibrium between halide and free-halogen, which does not change on storage.

### OBJECT AND SUMMARY OF THE INVENTION

A new invention is presented in order to overcome problems and disadvantages associated to the prior art by proving microbicidal compositions comprising novel species: di-(lower-alkyl)-long-chain-alkylbenzylammonium salts, the linear oligomeric quaternary ammonium compounds, as polymeric species of low molecular weight, together with a synergistic mixture of polyethyleneamines and polyester phosphoric.

An object of this invention is to present novel polymeric organic salts, comprising initially insoluble salts of linear polymers containing quaternizable nitrogen's, which can be either in the backbone of the linear polymer or disposed in side chains grafted along a polymer backbone. The starting soluble linear polymer material will have associated to each quaternizable nitrogen a single halogen anion consisting of chlorine or iodine. By formation of trihalides in each nitrogen centre, the insoluble salt will be precipitated from the initial solution, with a high halogen content.

These novel microbicidal compositions can be applied in different disinfectant formulations which present much more biocidal activity than the traditional quaternary ammonium salts, as benzalkonium chlorides, exhibiting very low toxicity and efficacity at low concentrations.

It is a further object of this invention to show the very low toxicity of the novel formulations. Comparatively, following the procedure detailed on U.S.Patent n° 4,192,894, Botre et al, Mar. 11, 1980, where a value of $LD_{50}$=569 mg/kg, by orally administering of BAC to mice, has been reported, we have found a value of $LD_{50}$=3000 mg/kg by oral ingest to mice of our invention.

It is an object of this invention to provide effective sterilizing mixtures which kill a broad spectrum of bacteria, fungi, viruses and spores.

An important object of this invention, is to provide the method of synthesis of the insoluble di-(lower-alkyl)-long-chain-alkylbenzyl ammonium salts, and the linear oligomeric quaternary ammonium compounds, and quaternary ammonium salts being obtained together whit polyethylene amides and polyester phosphoric, as reaction products. The invention, accordingly comprises a method of synthesising the pure and impure form, in crystalline apart by filtration, from the solution. The preparation including several steps will be detailed and the relation of one or more of such steps with respect to each of the others will be described. The composition and the relation of constituents will be exemplified in the following detailed disclosure, and the scope of the present invention will be indicated in the claims.

The invention provides a method to inhibit the growth of micro-organisms by contact, and to kill them in a short time, acting as bactericide and fungicide. In addition, the remnant activity of the invention allows its use as bacteria-static and fungi-static, controlling the germ growth.

Microbicidal formulations in each application of the invention have been adjusted in order to improve the efficiency in preventing and inhibiting the growth and killing a broad spectrum of bacteria, molds, mildews and rust, all fungi, and viruses, in a wide range of pH. The effective amounts of each component in the molecular mixture can readily be determined by one skilled in the art, and they vary in accordance with the type of micro-organism to be treated.

In reference to its sterilizing properties, this invention is effective as sporicide, because can kill bacteria and fungi spores. The new invention presents a better performance than other biocides and sterilizing developed up to now. It is a further object of this invention, to provide a broad-spectrum sterilizing compositions, which will remain as active persistent solutions for at least several weeks; it is yet another object, to provide several applications of this sterilizing which can be very effective on hard, non-adsorbent environmental surfaces, specially sanitary applications as critical surfaces of surgery, for sterilising tools of medical surgical, veterinary, medical and dentist devices, and all surfaces of clean rooms; also for sanitising dishes, cookware, floors and walls of dwellings, office buildings and restaurants, bathrooms, and toilets.

It is a further object of this invention to provide microbicidal formulations, for disinfecting by airway, in particular, in the air conditioned systems, devices, tubing and/or filters; also as fungicide applications on fibrous natural, synthetic and/or mixed materials. It is an object of this invention also to provide, compositions in agricultural applications as phytosanitary specially, the use for sanitise in agroalimentation, and disinfecting of vegetable consuming plant products.

It is a further object of the present invention, to provide microbicidal compositions containing the active molecular complex for the effective control of growth of micro-organism contamination with adverse consequences in the different steps of food elaboration and treatment, particularly in dairy products, and alcoholic beverages as result of the fermentation processes.

In summary, this invention presents an easy method of production of di-(lower-alkyl)-long-chain-alkylbenzylammonium salts, and the linear oligomeric quaternary ammonium compounds, as polymeric species, together with a synergistic mixture of polyethylene amides and polyester phosphoric. Also this invention presents the way of use of new disinfecting formulations in a wide spectrum of microbicidal applications, with very low toxicity and excellent sterilizing activity, in short time.

## BRIEF DESCRIPTION OF THE DRAWINGS

For a total understanding of the invention, reference is taken in connection with the accompanying drawings, in which:

Figure **1**, shows the doses (g/kg) administered orally of our molecular complex (following formulation indicated in example 1) as a function of the number of survivor mice.

Figure **2**, shows the activity of the present invention (according to formulation indicated in example 1) against *Bacillus subtilis* "sporulated".

## DESCRIPTION OF THE PREFERRED EMBODIMENTS

The present invention discloses the method for obtain trihalides of di-(lower-alkyl)-long-chain-alkyl-benzylammonium, and the linear oligomeric quaternary ammonium compounds, which is presented as precipitate, and its posterior solubilization, in appropriate solvents to get soluble compounds with high specificity of alkyl length chain and the anion used. Also its synergetic mixtures with alkylbenzylamines and quaternary ammonium salts. The chemical unity where the nitrogen centres are disposed in the backbone itself, of the oligomeric compounds can be represented by the fol-

lowing general formula;

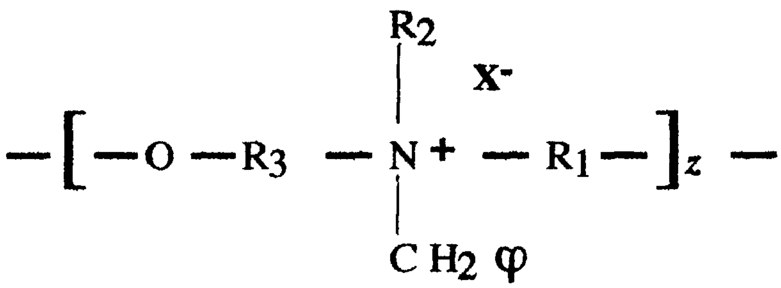

$z$ = from 2 to 6

where φ is a phenyl group,

$R_1$ is an alkyl group with a chain from 1 to 6 carbon atoms and mixtures thereof, or an alkenyl group having 2 to 6 cabon atoms, or an aralkyl group;

$R_2$= is an alkyl group of long chain, having from 10 to 20 carbon atoms, or an alkenyl group having 8 to 22 carbon atoms, or an independent rest of formula:

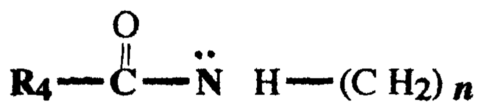

where $n$ = from 2 to 4, and $R_4$ is an alkyl rest with 2 to 22 carbon atoms;
$R_3$ is a group containing a low-alkyl chain having from 1 to 6 carbon atoms;
and $X^-$ is an halide, chloride or iodide, or trihalide group ($Cl_2I^-$, $I_2I^-$, $I_2Cl^-$).

SYNTHESIS

Quaternary ammonium compounds can be easily made by reacting halogen compounds, e. g. benzyl halide, with a tert-amine, e.g. coconut alkyldimethylamine. As indicated by Morrison and Boyd, such halides are preferably primary halides, and the alkyl group may be a small or very large group, depending on the product desired.

As first step of the synthesis, the compound alkyldimethylbenzyl ammonium chloride, could be readily obtained by essentially well-known standard procedures, as it is shown for example in, U.S. Patent 4,042,368 [Argiriardi, A.] Aug. 16, 1977. By the reaction, mol to mol, of alkyldimethyl amine and benzylchloride. The product obtained, named benzalkonium chloride, BAC, is an adduct of benzyl chloride and alkyldimethylamine, derived from the middle cut of a coconut oil distillate, with alkyl groups having from 10 to 16 carbon atoms, which are optimal for the selectivity and effectively of this type of quaternary amines.

Using the above mentioned method, we promote the exchange of the alkyl group of alkyldimethylamine by group of lauryl(C12)dimethylamine. The equimolar reactants, lauryldimethylamine and benzylchloride, may be dissolved in alcohol as isopropanol, (from 5 to 10% weight of the reactants). The reaction is maintained preferably at reflux temperature, until the reaction is essentially completed, the equilibrium of the ammonium halide is favourable by addition of a particular non-ionic surfactant, in order to promote the active contact between the reactants. The better non-ionic surface active to be used is the alkyl(C14-C16)polyethylene glycol. The main product of the reaction, is lauryldimethylbenzylammonium chloride, n-$C_{12}H_{25}$ $(CH_3)_2$ N $CH_2$ $C_6H_5$ Cl, which could be purified from the reaction mixture.

As a second step of the reaction, the lauryl group (n-$C_{12}H_{25}$), is exchanged mol to mol by n-alkyl very long chains, which are obtained from a fatty alcohol with 14 to 18 carbon atoms and polyoxiethylenated with a number of 5-6 oxiethylen units, for example the polyoxyethylenefatty alcohol-ether. This reaction can be made by mixing the reactants in a vessel equipped with a stirred and temperature raised to 40 C during, 1-2 hours. In order to aid this displacement, also is necessary to add non-ionic agents. Various well-known non-ionic surface-active agents can be mixed with lauryldimethyl amine. For this invention the more advantageous non-ionic surface-active agents have been selected those having the alkyl group with 10 to 20 carbon atoms, and also containing from 10 to 15 oxiethylene units. The alkyl(C12-C18)dimethylamine polyethoxylated has been found to be indispensable, for the formation of the linear polymer.

As third step, in order to ensure the displacement of the chlorides to specific halides, and the saturation of the nitrogen centres, elemental molecular halogen is added. Optimal conditions should be established at this stage. Special care should be paid to keep the equilibrium halide/free-halogen towards a predominance of mixed halides species in the redox reaction.

Particular care should be paid concerning the acidity, when the laurylbenzylamine reacts to obtain the salts of dimethylalkylbenzylamonium trihalides as polymers, from di-(lower-alkyl)-long-chain-alkylbenzyl ammonium halide. In order to reduce the pH values below 3.0, the ortophosphoric acid has been used. Also, non-ionic agents have been used to complex halogen species. Amines and quaternary compounds contain at least 15 to 20 oxyethylene. So, ethylene oxides represent a substantial portion of the mixture.

As a fourth step, is necessary an excess of the halogen selected, chlorine and/or iodine. The quantity of free-halogen added to increase the total halogen content is directly proportionate to the insoluble polymer salts, which precipitate from the solution, together with a synergistic mixture of alkylbenzylamines, polyethylenamides, and polyesterphosphoric. The separation, by filtration on filter paper, complete the simple method of isolation of the crystalline precipitate.

Finally the fifth step, the crystalline precipitated is dissolved with a mixture of solvents, according to each application as described below.

As it has been shown, the production of the novel molecular complex of this invention is particularly simple. The final product, defined as a molecular complex, contains a mixture of alkylbenzylamine, di-(lower-alkyl)-long-chain-alkylbenzyl ammonium trihalides, and selected alkylbenzyl amines, polyethylene amides, and polyester phosphoric. It is important to notice that the active molecular complex of low toxicity is already present as a product of the reaction, when the procedure detailed above is followed. However, particular formulations are disclosed below in order to improve the specificity of the product in each particular application.

The principal chemical species, obtained by this synthesis, defined as molecular complex, are:

***a.*** di-(lower-alkyl)-long-chain-alkyl-benzyl ammonium salts, of the structure:

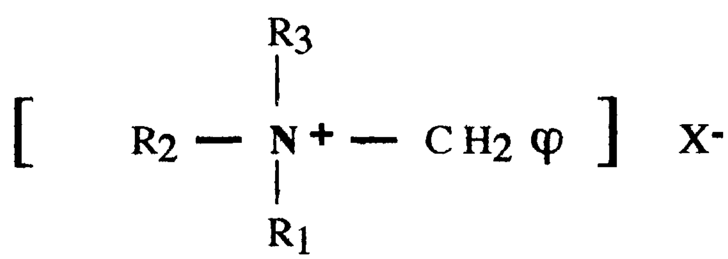

where φ is a phenyl group,

$R_1$= $R_3$ is an alkyl group having from 1 to 6 carbon atoms, preferably C2, ethyl or C3, propyl; $R_2$ is an alkyl group of long chain, from 10 to 20 carbon atoms, (decyl, dodecyl, tetradecyl, myristyl, hexadecyl, cetyl, palmitoyl, octadecyl, stearyl, eicosyl, preferably: C14, myristyl, C16, cetyl, palmitoyl);

and $X^-$ is a halide, or trihalide group, as $Cl_2I^-$, $I_2I^-$, $I_2Cl^-$.

***b***. polymeric species of low molecular weight (oligomeric species), having from 2 to 6 monomer units, of the structure:

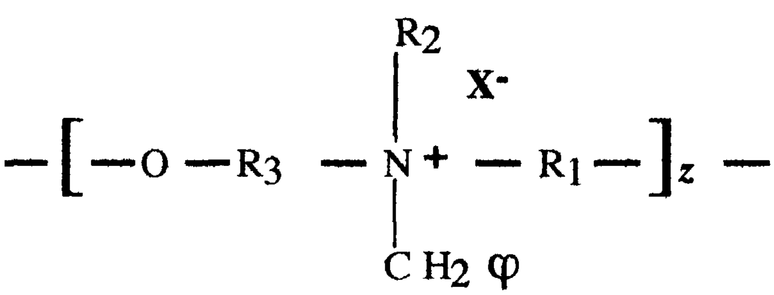

*z* = from 2 to 6

where φ is a phenyl group,

$R_1$= $R_3$ is an alkyl group having from 1 to 6 carbon atoms, preferably ethyl or propyl, for the short polymerisation; $R_2$ is an alkyl group of long chain having preferably 14 or 16 carbon atoms as well as tetradecyl (myristyl), cetyl or palmitoyl; and $X^-$ is a trihalide group ($Cl_2I^-$, $I_2I^-$, $I_2Cl^-$).

***c***. quaternary ammonium salts, of the structure:

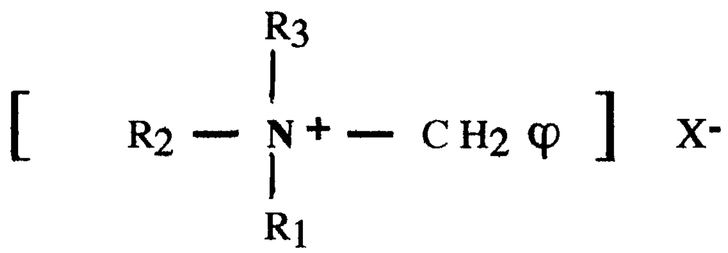

where φ is a phenyl group,

$R_1$ is an alkyl group having from 1 to 6 carbon atoms, or H, an alkenyl group having from 2 to 6 carbon atoms, and an aralkyl group; $R_2$ is an alkyl group of long chain, having from 10 to 20 carbon atoms, or an alkenyl group having 8 to 22 carbon atoms, or an independent rest of formula:

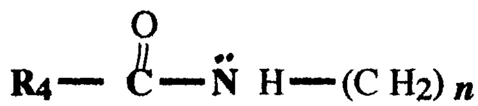

where *n* = from 2 to 4, and $R_4$ is an alkyl rest from $C_2$ to $C_{22}$;

$R_3$ is a group containing a low-alkyl chain having from 1 to 6 carbon atoms;

and $X^-$ is an halide, chloride or iodide, or trihalide ($Cl_2I^-$, $I_2I^-$, $I_2Cl^-$).

*d*. surface active phosphate esters of structure:

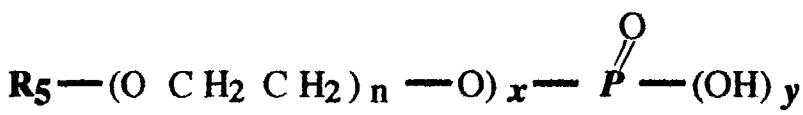

where $x + y = 3$ , and R5 group has from 4 to 18 carbon atoms, in order to introduce additional substances such as phosphoric esters, where n value determined the molecular weight of $R_5$.

*e*. poly-ethanol amines of the general formula:

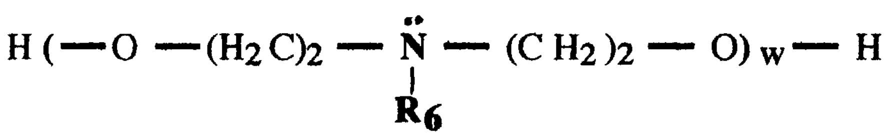

$2 < \underline{w} < 10$

where $R_6$ is an alkyl group having from 2 to 22 carbon atoms.

The following examples illustrate the preparation and use of the different applications of microbicidal compositions. The effectiveness of each application over a wide spectral has been proved by several methods where a quick response, and high activity, have been evidenced.

EXAMPLE 1: OPTIMAL STERILIZING COMPOSITION

For sterilizing action, the optimal composition, expressed in percent by weight, is showed in Table A. The use of this formulation is disclosed in the following examples.

TABLE A

| | |
|---|---|
| Active molecular complex (precipitate obtained) | 40- 45% |
| Dimethylalkylamine polyethoxylated | 30- 33% |
| Alkylpolyethyleneglycol (of $C_{12}$ Laurate) | 10- 12% |
| Monopropyleneglycol | 5- 8% |
| Triglycerolester of alkylfattyamines | 6- 10% |
| Propanotriol | 4- 7% |
| Coconut Polyethanolamide | 10- 11% |
| Ortophosphoric acid and esters(buffer pH 3-5) | 4- 5% |

EXAMPLE 2: ORAL ACUTE TOXICITY TEST

Methods:

Acute toxicity was tested and median lethal dose, $LD_{50}$, value was obtained using 21 ddY male mice, 5 week-old, weighting about 22 g. Sequential dilutions (20%, 33%, and 50%) in water of the formulation indicated in Table A were administrated orally to a set of mice ad their body weight examined during four weeks. Saline solutions of equal volume and pH were administrated to control mice.

Results:

The value of $LD_{50}$ was calculated by using a log-logistic model. Figure 1 shows the plot of number of survival mice as a function of doses administrated. The $LD_{50}$ value is about 3.000 mg/kg in mice for this particular formulation of the disinfectant.

EXAMPLE 3: SPORICIDAL ACTIVITY TEST

The optimal sterilizing composition indicated in Table A, was the most efficacious as sterilizing agent against bacterial spores. In this case the effectiveness is closely determined by the pH. The sporicidal activity determination, was tested against *Bacillus subtilis (IFO 1372)* "*sporulated*". The optimum pH values were stabilized between 3,0 and 3,6.

Methods:

1. Micro-organisms were grown in 5 ml of liquid medium (Nutrient broth 18g in 1 litre of de-ionised sterile water) at 37 C overnight. Growth was kept for two weeks at 37 C, with sporulation, confirmed microscopically. The determination of number of colony forming units, was performed after plate inoculation of 8 successive dilution's, at duplicate, using the Conradi method. N° of CFU/ml: $8.5 \times 10^6$.
2. 5%, 10%, 20% and 25% dilution in water of the formulation described in Table A, were used.
3. Testing: 0.9 ml of diluted disinfectant in tube, added 0.1 ml of culture.
4. 0.01 ml of the sample after 5, 10, 15, 20, 30, 45 and 60 min was added into 5 ml of the medium including 2% neutraliser.
5. Check growth after overnight at 37 C.

Results and conclusion:

Figure 2 shows that the sporicidal effect of the new invention, at the experimental conditions.

EXAMPLE 4: BACTERICIDAL ACTIVITY TEST

In this example, the formulation indicated in Table A was tested against Gram-positive rods, *Bacillus subtilis*, and rod-shaped bacteria acid-fast: *Mycobacterium tuberculosis*, for study its effectively. A 1% dilution of this composition,

during a contact times of 1 min, kills 1,0x$10^8$ cfu/ml of *Bacillus subtilis*, and 1,0x$10^8$ cfu/ml of *Mycobacterium tuberculosis*.

Also, a 1% dilution of the optimal sterilizing composition indicated in Table A, presented a particular action as bactericidal, killing with only 1 min. of contact a broad spectrum of bacteria Gram negatives: *Pseudomonas aeruginosa*, 3,7x$10^8$ cfu/ml, with a elevated pathogenic potential, the opportunist *Escherichia coli*, 1,0x$10^8$ cfu/ml, and also Gram-positives: *Staphylococcus aureus*, 1,5x$10^8$ cfu/ml, *Streptococcus pyogenes*, 1x$10^8$ cfu/ml; and agents of "thyfus": *Salmonella parathyphi A*, 2,6x$10^8$ cfu/ml, and *Salmonella parathyphi B*, 1,7x$10^8$ cfu/ml; the pathogenic bacteria: *Klebsiella pneumoniae*, 1,9x$10^8$ cfu/ml, *Proteus vulgaris*, 1,5x$10^8$ cfu/ml; the cholerae agent, *Vibrio cholerae*, 1,9x$10^8$ cfu/ml; and also *Shigella flexneri*, 4,7x$10^7$ cfu/ml, *Shigella dysenteriae*, 7,3x$10^7$ cfu/ml.

EXAMPLE 5: FUNGICIDAL ACTIVITY TEST

The optimal sterilizing composition indicated in Table A, is very effective as fungicide, the test was carried out against: *Aspergillus niger, Penicillum sp, Cladosporium sp, Alternaria sp, Fusarium sp,* which are frequently present in walls, conditioned systems, converter devices, filters, conducts; and also in fibrous natural and synthetic materials The best fungistat activity of the composition indicated in Table A was demonstrated for a 0,2% dilution in equal parts in weight of water and isopropanol.

EXAMPLE 6: VIRUCIDAL ACTIVITY TEST, HIV

Virucidal action against the human inmunodeficiency virus (HIV), of the composition indicated in Table A was tested. A dilution of 0,1%, in 30 seconds is effective to inactive 1x$10^7$ viruses/ml of AIDS pathogen agents

EXAMPLE 7: ANTISEPTIC FORMULATION

The formulation indicated in Table B is recommended as general antiseptic germicide. This composition is optimised for the care of skin, including skin protectors and also hydrophilic products for maintenance of the natural moisture of human epidermis.

TABLE B

| ANTISEPTIC USE COMPOSITION | |
|---|---|
| Active molecular complex | 30 - 40% |
| Triethanolamide lauryl ether sulphate | 25 - 28% |
| Coconut ethanol amide | 8- 9% |
| Glyceryc ester of fatty acid | 10 - 12% |
| Alkyldimethyl aminoxide | 9 - 11% |
| Coconut amidobetaine | 5 - 6% |

This composition is specially indicated for sanitary use of medical surgeons and members of all health professions, who demand products for hand cleansing with a rapid disinfecting and residual protection against immediate re-infection. This application has non-ionic surfactants with high affinity to the skin, in order to ensure an effective remnant activity, obtaining a good prophylactic protection over a broad spectrum.

EXAMPLE 8: GERMICIDAL FORMULATION

Composition indicated in Table C, illustrates a germicidal formulation of general use to clean and make free from infection all hard non-absorbent environmental surfaces. The new invention can disinfect, destroying harmful microorganisms in: dialysis tubing, endoscope devices, respirators and draining tubes, and those medical tools and devices, and also dentist and veterinary tools and devices, where the sterilization by steam or ethylene oxide are either impractical or physiologically disfavoured.

TABLE C

| GERMICIDAL FORMULATION | |
|---|---|
| Active molecular complex | 40 - 60% |
| Propylene glycol | 16- 18% |
| Glycerol, propanetriol | 3 - 4% |
| Glycerid ester of fatty acid | 16 - 18% |
| Ortophosphoric acid and ester | 1 - 2% |
| Coconut Ethanol amide | 8 - 10% |

A 1% dilution of the formulation indicated in Table C, during 1 min. of contact kills: *Mycobacterium smegmatis*, $1,0x10^8$ cfu/ml, *Mycobacterium kansasii*, $2,4x10^8$ cfu/ml, *Saccharomices cerevisiae*, $8,0x10^8$ cfu/ml, *Candida albicans*, $1x10^8$ cfu/ml, and*Bacillus anthracis*, $2,5x10^7$ cfu/ml.

The sterilizing compositions indicated in Table A, B and C, inhibit the growth and kill bacteria, fungi, viruses and spores, were more effective than the prior art. The applications described above present clearly marked synergistic effects being capable to suppress microbial activity at much lower concentrations than the one used by the previous art.

As it have been illustrated through all the examples described, the effectiveness at low concentration of the active ingredients of the novel invention have been clearly demonstrated. The advantage of being effective to kill a broad spectrum of micro-organisms in short time have also been shown. The scope of legal protection is set forth in the claims as follow.

**Claims**

1. The following chemical species are defined as the molecular complex:

***a.*** di-(lower-alkyl)-long-chain-alkyl-benzyl ammonium salts, of the structure:

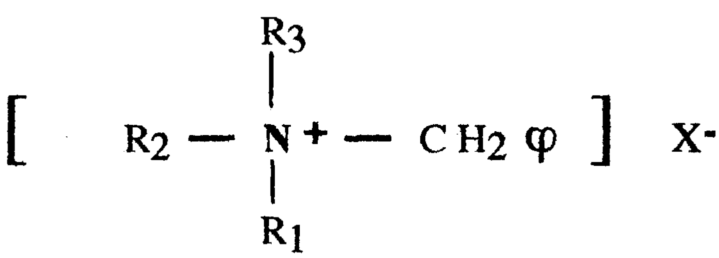

where φ is a phenyl group,

$R_1 = R_3$ is an alkyl group having from 1 to 6 carbon atoms, methyl, ethyl, propyl, butyl, pentyl, hexyl, preferably C2, ethyl or C3, propyl; $R_2$ is an alkyl group of long chain, from 10 to 20 carbon atoms, (decyl, dodecyl, tetradecyl, myristyl, hexadecyl, cetyl, palmitoyl, octadecyl, stearyl, eicosyl, preferably: C14, myristyl, C16, cetyl, palmitoyl); and $X^-$ is a halide, or trihalide group, as $Cl_2I^-$, $I_2I^-$, $I_2Cl^-$.

***b.*** polymeric species of low molecular weight (oligomeric species), having from 2 to 6 monomer units, of the structure:

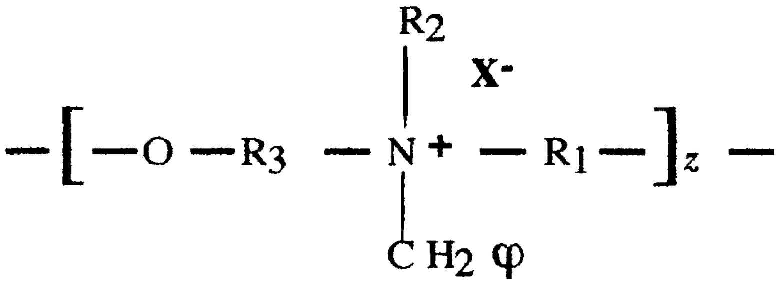

$z$ = from 2 to 6

where φ is a phenyl group,

$R_1 = R_3$ is an alkyl group having from 1 to 6 carbon atoms, preferably ethyl or propyl, for the short polymerisation; $R_2$ is an alkyl group of long chain having preferably 14 or 16 carbon atoms as well as tetradecyl (myristyl), cetyl or palmitoyl; and $X^-$ is a trihalide group ($Cl_2I^-$, $I_2I^-$, $I_2Cl^-$).

*c*. quaternary ammonium salts, of the structure:

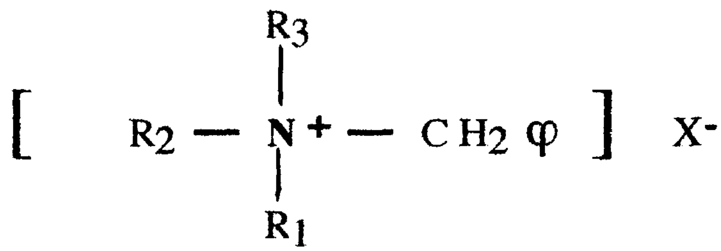

where φ is a phenyl group,

$R_1$ is an alkyl group having from 1 to 6 carbon atoms, or H, an alkenyl group having from 2 to 6 carbon atoms, and an aralkyl group;

$R_2$ is an alkyl group of long chain, having from, 10 to 20 carbon atoms, or an alkenyl group having 8 to 22 carbon atoms, or an independent rest of formula:

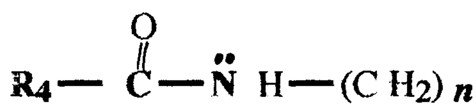

where $n$ = from 2 to 4, and $R_4$ is an alkyl rest from $C_2$ to $C_{22}$ ;

$R_3$ is a group containing a low-alkyl chain having from 1 to 6 carbon atoms;

and $X^-$ is an halide, chloride of iodide, or trihalide ($Cl_2I^-$, $I_2I^-$, $I_2Cl^-$).

*d*. surface active phosphate esters of structure:

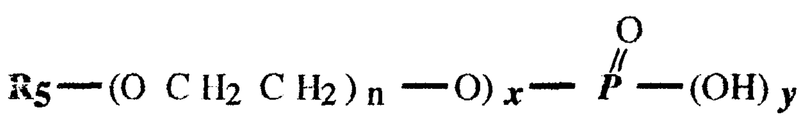

where $x + y = 3$ , and R5 group has from 4 to 18 carbon atoms, in order to introduce additional substances such as phosphoric esters, where n value determined the molecular weight of $R_5$.

*e*. poly-ethanol amines of the general formula:

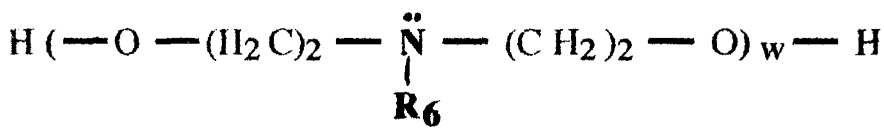

2<w<10

where $R_6$ is an alkyl group having from 2 to 22 carbon atoms.

2. The synthesis for preparing the chemical species defined in claim 1, Also it is claimed the formula of the optimal sterilizing compositions presented in Table A, B and C or any compositions of chemical species described in items ***a, b, c, d, e*** of claim 1, wherein the weight ratio of the compositions, could vary from 100% to 0.00001%.

3. Microbicidal compositions according to claims 1 and 2, for use as active principle in general microbicide, bactericide, fungicide, sporicide and virucide for all surfaces either alone or in combination with other biocidal compounds.

4. Microbicidal compositions that includes claims 1, 2 and 3, applied specially in disinfecting of sanitary critical surfaces, hard non-adsorbent environmental surfaces, floor and wall of surgery, and for sterilizing devices of medical surgical, veterinary and dentist.

5. Microbicidal compositions that includes claims 1, 2 and 3, applied for disinfecting of surfaces, specially for airway micro diffusion, in clean rooms, and in particular application in air conditioned systems, devices, tubing, conducts and/or filters.

6. Microbicidal compositions including claims 1, 2 and 3, applied as disinfectant general microbicidal, and in particular fungicide of fibrous natural, synthetic and/or mixed materials, also sterilizing compositions comprising claims 2 to 5 applied for sanitising the clean surfaces in pharmaceutical and related industries, milk and related industries, and clean surfaces of storage, transport, distribution and any food processing room or food industry.

7. Antiseptic compositions applied for hand cleansing of medical surgeons, as well as veterinary, dentist, and medical uses, and also for sanitary workers in medical activities.

8. Microbicidal compositions containing the active molecular complex claimed above for all applications concerned with the anti viral and anti-retroviral activity. All uses of possible composition acting as anti viral and anti-retroviral for prevention, control and disinfecting practice, and also as part of medicines against viruses.

9. Microbicidal compositions applied specially to hard non-adsorbent surfaces as dialysis tubing, endoscope devices, draining and respirators tubes; and sterilizing compositions for general de-contamination of water applied to fish factory and related industries.

10. Microbicidal compositions applied in agriculture, as phytosanitary specially, the use for sanitise in agroalimentation, and disinfecting of vegetable consuming plant products; and applied for the control of growth of micro-organism contamination with adverse consequences in the different steps of food elaboration and treatment, particularly in dairy products, and alcoholic beverages as result of fermentation processes.

## Figure 1: ORAL ACUTE TOXICITY TEST

TABLE OF DATA

| (g/kg) | n.survivors | Ratio |
|---|---|---|
| 1.81 | 4 | 4/5 |
| 3.00 | 2.5 | 3/6 |
| 4.52 | 0 | 0/5 |

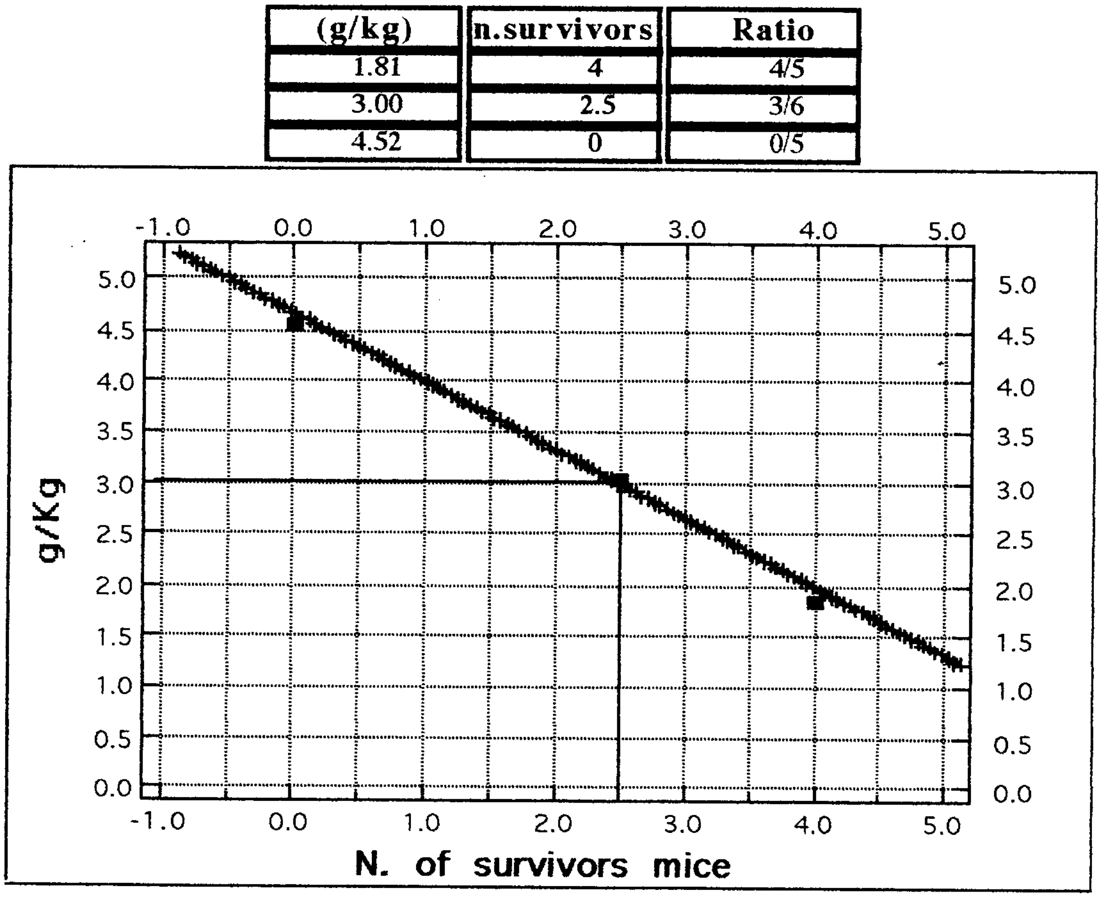

Figure 2

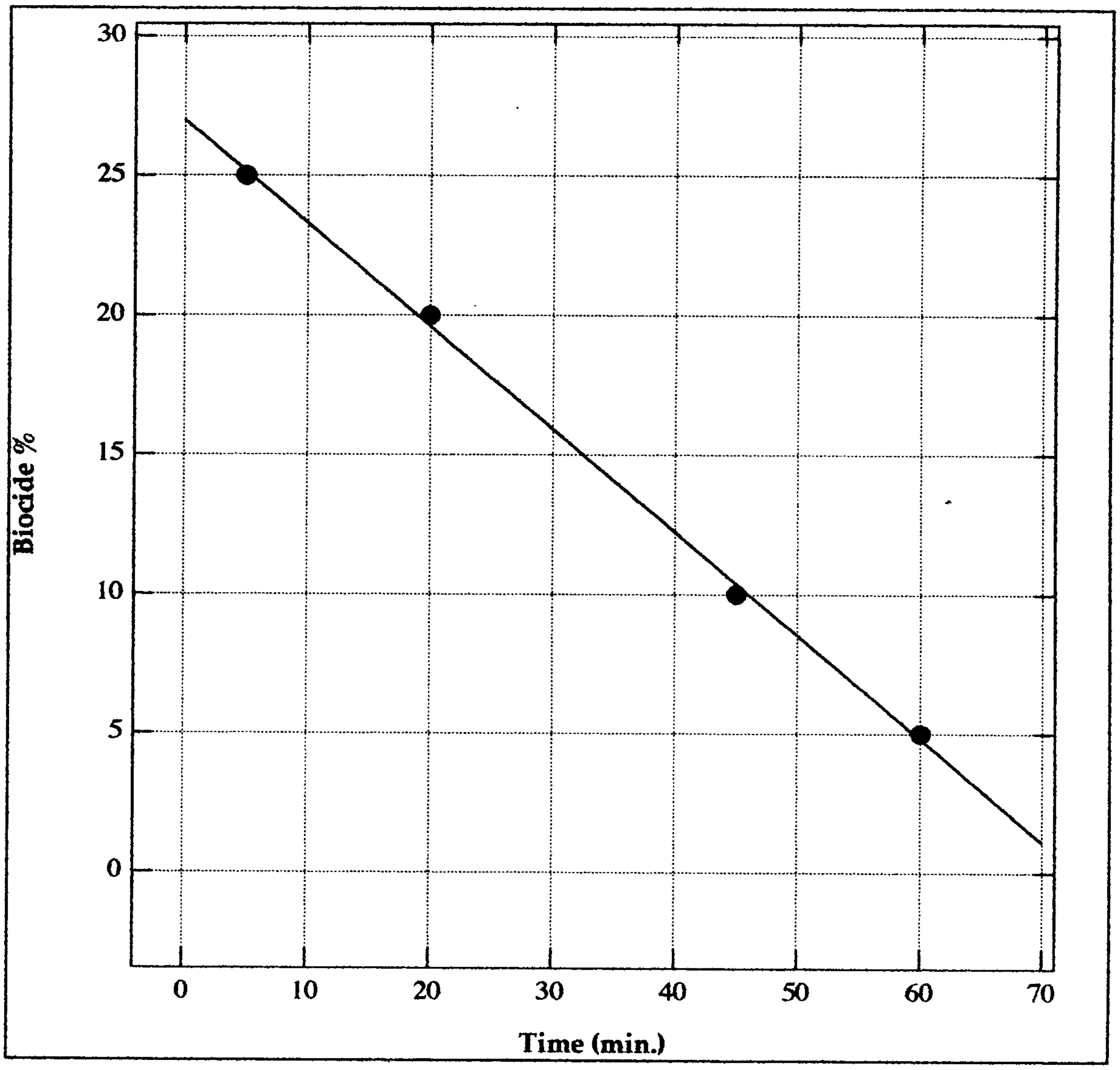

European Patent Office

# EUROPEAN SEARCH REPORT

Application Number
EP 95 40 2772

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-3 778 476 (A. REMBAUM ET AL.)<br>* claims *<br>* column 6, line 11 - line 13 *<br>--- | 1-10 | A01N33/12 |
| A | EP-A-0 382 562 (BUCKMAN LABORATORIES)<br>* claims *<br>--- | 1-10 | |
| A | EP-A-0 018 492 (HOECHST)<br>* claims *<br>----- | 1-10 | |
| | | | TECHNICAL FIELDS SEARCHED (Int.Cl.6) |
| | | | A01N |

The present search report has been drawn up for all claims

| Place of search | Date of completion of the search | Examiner |
|---|---|---|
| THE HAGUE | 10 June 1996 | Decorte, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)